# EUROPÄISCHE PATENTSCHRIFT

(11) **EP 3 471 509 B1**
(45) Veröffentlichungstag und Bekanntmachung des Hinweises auf die Patenterteilung: **22.04.2026**
(21) Anmeldenummer: 18200742.7
(22) Anmeldetag: 16.10.2018
(51) Int. Cl.: H05B 3/42, B29C 45/17, B29C 45/27

(54) **ELEKTRISCHE BAUTEILHEIZUNG UND VERFAHREN ZUM AUFBRINGEN DERSELBEN**
ELECTRICAL COMPONENT HEATING AND A METHOD OF APPLICATION THEREOF
CHAUFFAGE ÉLECTRIQUE DE COMPOSANTS ET SON PROCÉDÉ D'APPLICATION

(30) Priorität: 16.10.2017 DE 102017123995
(43) Veröffentlichungstag der Anmeldung: 17.04.2019
(73) Patentinhaber: GC-heat Gebhard GmbH & Co. KG, 51545 Waldbröl (DE)
(72) Erfinder: Kessel, Alfons, 53639 Königswinter (DE)
(74) Vertreter: KBN IP Patentanwälte Partnerschaft mbB

(56) Entgegenhaltungen:
- EP-A1- 2 848 381
- DE-A1- 102009 039 778
- DE-A1- 102010 006 356
- DE-A1- 102013 100 666
- DE-B4- 10 356 059
- DE-U1- 202010 001 370
- US-A- 6 163 016

## Beschreibung

Die Erfindung betrifft eine elektrische Bauteilheizung, umfassend ein zylindrisches Bauteil, ein an dem zylindrischen Bauteil angebrachtes elektrisches Heizelement und eine dem elektrischen Heizelement benachbart zugeordnete rohrförmige Spannhülse aus einem federelastischen Material, die eine zylindrische Außen- und Innenmantelfläche und einen über ihre Länge verlaufenden durchgehenden Schlitz sowie eine Längsachse aufweist, wobei das Heizelement an den beiden axialen Enden der Spannhülse mit dieser verbunden ist und der Schlitz über die Länge der Spannhülse betrachtet schraubenlinienförmig verläuft, wobei die Spannhülse mitsamt des elektrischen Heizelements auf dem Bauteil unter Ausübung einer radialen Anpresskraft festgeklemmt ist.

Derartige Bauteilheizungen sind bekannt, wozu auf die DE 103 56 059 B4 und die EP 0 653 283 B1 exemplarisch verwiesen wird. Sie dienen dazu, das zylindrische Bauteil, bei dem es sich zum Beispiel um eine Spritzdüse von Spritzgießwerkzeugen oder einen entsprechenden Heißkanal für die Durchleitung einer Kunststoffschmelze handeln kann, auf Gebrauchstemperatur zu erwärmen. Die Bauteilheizungen müssen leicht montier- und demontierbar sein, nur geringen Platzbedarf aufweisen und eine ausreichend hohe Spannkraft auf das Bauteil auch bei hohen Temperaturwechselbelastungen und Einsatztemperaturen bis zu etwa 500 °C sicherstellen. Ferner sollen sie auch vorhandene Toleranzen im Bauteildurchmesser ausgleichen und durch unterschiedliche Gestaltung des Heizelementes an unterschiedliche Anforderungen angepasst werden können.

Aus der EP 2 848 381 A1 ist eine elektrische Bauteilheizung mit den eingangs genannten Merkmalen bekannt, wobei die Spannhülse durch axiales Stauchen vorübergehend aufgeweitet werden kann, um sie auf einem zylindrischen Bauteil zu montieren bzw. zu demontieren und durch axiales Strecken der Spannhülse eine Durchmesserverringerung und Erzeugung einer Klemmkraft bewirkt werden kann.

Die DE 10 2009 039 778 A1 offenbart ein Heizelement mit einer geschlitzten, gut wärmeleitenden Hülse, die eine Nut zur Aufnahme des Heizelementes aufweist, welche vom Heizelement überwickelt ist. Die Hülse dient damit nur der Erzielung einer gleichmäßigen und reproduzierbaren Wärmeverteilung, nicht aber als Spannhülse zum Klemmen des Heizelements auf dem Bauteil. Zur Demontage kann die bekannte Hülse im Bereich der Nut mit einem Werkzeug aufgeweitet werden.

Aufgabe der Erfindung ist es, eine elektrische Bauteilheizung der eingangs genannten Art vorzuschlagen, welche sich besonders einfach und flexibel fertigen lässt, kostengünstig herstellbar ist und mit verringertem Aufwand montieren lässt.

Zur Lösung der gestellten Aufgabe wird erfindungsgemäß die Ausgestaltung einer elektrischen Bauteilheizung gemäß den Merkmalen des Patentanspruchs 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass die Bauteilheizung ferner ein Drehwerkzeug und die Spannhülse an mindestens einem Ende eine für den Angriff eines Drehwerkzeuges eingerichtete Aussparung aufweist, in die das Drehwerkzeug einsetzbar ist, um miittels Aufbringen eines um die Längsachse gerichteten Drehmoments an einem Ende und Fixieren des gegenüberliegenden Endes eine elastische Aufweitung bzw. Komprimierung des lichten Innendurchmessers der Spannhülse und des Heizelements zu bewirken.

Aufgrund des erfindungsgemäß vorgesehenen schraubenlinienförmig umlaufenden Schlitzes über die Länge der Spannhülse ist es möglich, an einem ihrer Enden z.B. ein Drehwerkzeug in einer hierfür vorgesehenen Aussparung anzusetzen und das gegenüberliegende Ende zum Beispiel von Hand oder ebenfalls über ein dort angreifendes Drehwerkzeug zu fixieren, woraufhin durch Aufbringung eines ausreichend hohen, jedoch von Hand zu bewirkenden Drehmoments eine elastische Aufweitung bzw. Komprimierung des lichten Innendurchmessers der Spannhülse entlang des schraubenlinienförmig umlaufenden Schlitzes bewirkt werden kann. Da das Heizelement mit der Spannhülse im Bereich der beiden axialen Enden derselben verbunden ist, wird auch das Heizelement selbst gleichermaßen in seinem Durchmesser variiert. Das Aufbringen des Drehmoments kann alternativ auch von Hand erfolgen.

Sofern es sich beim zu beheizenden Bauteil um ein zylindrisches Bauteil handelt, auf dessen Außenoberfläche die elektrische Bauteilheizung gemäß der Erfindung aufgebracht werden soll, wird das elektrische Heizelement auf die zylindrische Außenoberfläche des Bauteiles aufgebracht und die Spannhülse so angeordnet, dass sie das elektrische Heizelement außenseitig nach Art eines Mantels umgibt, d.h. das elektrische Heizelement liegt an der Innenmantelfläche der Spannhülse.

Alternativ kann auch die Spannhülse unmittelbar auf dem zu beheizenden Bauteil aufgebracht sein und das elektrische Heizelement befindet sich im Bereich der Außenmantelfläche der Spannhülse.

Es ist somit möglich, das elektrische Heizelement und/oder die Spannhülse in Bezug auf den Durchmesser des zu beheizenden Bauteiles leicht untermaßig herzustellen und vor der Montage auf dem Bauteil mittels des aufgebrachten Drehmoments die Spannhülse mitsamt dem daran endseitig fixierten Heizelement hinsichtlich ihres jeweiligen Durchmessers aufzuweiten.

In diesem aufgeweiteten Zustand kann die Spannhülse mitsamt des innerhalb der Spannhülse angeordneten elektrischen Heizelements auf das zu beheizende Bauteil in axialer Richtung aufgeschoben werden. Nach anschließender Rücknahme bzw. Entlastung des Drehmoments stellen sich die Spannhülse und das Heizelement elastisch unter Verringerung des lichten Innendurchmessers zurück und die Spannhülse klemmt mitsamt des elektrischen Heizelements in der gewünschten Weise auf dem Bauteil fest.

Es ist ebenfalls möglich, ein Bauteil mit einer zylindrischen Aufnahmebohrung mit der erfindungsgemäßen Bauteilheizung zu beheizen. In diesem Falle wird das Heizelement in die zylindrisch ausgebildete Aufnahmebohrung eingebracht und die Spannhülse liegt nach Art eines Kerns innenseitig am Heizelement an. In diesem Falle werden die Spannhülse und das Heizelement in Bezug auf den Durchmesser der Aufnahmebohrung des zu beheizenden Bauteiles vorzugsweise leicht übermaßig hergestellt und vor der Montage mittels des aufgebrachten Drehmoments hinsichtlich ihres jeweiligen Durchmessers komprimiert.

Auch ist es möglich, das Heizelement im Bereich der Innenmantelfläche der Spannhülse anzuordnen, wenn die Spannhülse nach Art eines Kerns in eine zylindrische Bohrung eines Bauteiles eingesetzt wird.

In diesem komprimierten Zustand kann die Spannhülse mitsamt des elektrischen Heizelements in die Aufnahmebohrung des zu beheizenden Bauteils in axialer Richtung eingeschoben werden. Nach anschließender Rücknahme bzw. Entlastung des Drehmoments stellen sich die Spannhülse und das Heizelement elastisch unter Erhöhung des jeweiligen Außendurchmessers zurück und die Spannhülse klemmt zusammen mit dem elektrischen Heizelement in der gewünschten Weise auf der Oberfläche der Aufnahmebohrung des Bauteils fest.

Es ist offensichtlich, dass diese Arten der Befestigung besonders einfach und schnell zu bewerkstelligen und in umgekehrter Reihenfolge auch gleichermaßen einfach wieder aufzuheben sind.

Nach einem Vorschlag der Erfindung verläuft der Schlitz in Form eines vollständigen Schraubenganges über die Länge der Spannhülse, was eine besonders gleichmäßige und leichte Veränderung des lichten Durchmessers als Reaktion auf das aufgebrachte Drehmoment sicherstellt.

Darüber hinaus kann vorgesehen sein, dass der Schlitz an den Endbereichen der Spannhülse mit einer geringeren Steigung verläuft, als es in dem Längenabschnitt zwischen den Endbereichen der Fall ist, wodurch eine gleichmäßige Aufweitung des Innendurchmessers des Heizelementes bei ggf. unterschiedlicher Steigung desselben erreicht wird.

Nach einem weiteren Vorschlag der Erfindung ist ein Endbereich der Spannhülse mit einer Ausnehmung für den Durchtritt von Anschlussabschnitten des elektrischen Heizelementes ausgestattet, während der gegenüberliegende Endbereich die Aussparung für den Angriff des Drehwerkzeugs aufweist.

Als Drehwerkzeug kann beispielsweise ein handelsüblicher Hakenschlüssel dienen, wie er zum Anziehen und Lösen von Verbindungselementen, wie zum Beispiel Nutmuttern oder Deckeln bekannt ist. Es ist aber auch möglich, andere Drehwerkzeuge vorzusehen und es ist im Rahmen der Erfindung auch möglich, anstelle einer Ausnehmung andere Widerlager für den Angriff eines Drehwerkzeugs, beispielsweise vorstehenden Nocken oder dergleichen vorzusehen.

Die Spannhülse kann aus einem geeigneten federelastischen Material, beispielsweise Edelstahl gebildet sein, wobei vorzugsweise die zur elastischen Rückstellung genutzte Federkraft des eingesetzten Materials in einem Temperaturbereich zwischen Raumtemperatur und etwa 500 °C erhalten bleibt, weiter vorzugsweise mit konstanter Federkraft über den gesamten Temperaturbereich. Auch können Bimetall-Bleche oder plattierte Bleche und andere geeignete Materialien zum Einsatz kommen. Insbesondere kann die Spannhülse auch auf Basis von Messing oder einer Messinglegierung gebildet sein.

Die Herstellung der Spannhülse gestaltet sich denkbar einfach, denn es kann zunächst ein planer Blechzuschnitt des zu verwendenden Materials zweidimensional mit der Schlitzkontur versehen werden und anschließend zu der gewünschten zylindrischen bzw. rohrförmigen Konfiguration umgeformt werden, in welcher der Schlitz sodann schraubenlinienförmig über die Länge der Spannhülse betrachtet verläuft.

Das elektrische Heizelement kann in an sich bekannter Weise wendelförmig verlaufend angeordnet sein, wobei die Steigung des wendelförmigen Verlaufes je nach Anforderung konstant oder veränderlich ausgeführt ist.

Weiterhin kann die Spannhülse auf ihrer dem Heizelement zugewandten Oberfläche, d.h. der Innen- oder Außenmantelfläche mindestens eine nutförmige Vertiefung aufweisen, in der das elektrische Heizelement zumindest teilweise aufgenommen ist. Im Falle mehrerer derartiger nutförmiger Vertiefungen können entsprechend auch mehrere elektrische Heizelemente zur Ausbildung entsprechend mehrerer unabhängiger Heizkreise aufgenommen werden.

Die Einbringung der nutförmigen Vertiefungen ist bei Herstellung der Spannhülse aus einem planen Blechzuschnitt besonders einfach, da sie in den Blechzuschnitt zweidimensional eingebracht werden können, bevor die Umformung des Blechzuschnittes zu der rohrförmigen Spannhülse erfolgt.

Nach einem weiteren Vorschlag der Erfindung kann ein Endbereich der Spannhülse so ausgestaltet sein, dass die Messspitze eines Mantelthermoelements direkt oder kombiniert mit einem Zusatzbauteil aufgenommen werden kann. In diesem Falle kann der spiralförmig verlaufende Schlitz über die Länge der Spannhülse so ausgeführt werden, dass hierin das Thermoelement bis zum anderen Ende der Spannhülse geführt werden kann, ohne den Einbauraum zu vergrößern. Über das Thermoelement kann zum Beispiel eine Rückmeldung der an der Bauteilheizung anliegenden Temperatur an eine Steuer- und Regeleinrichtung erfolgen.

Durch die erfindungsgemäß vorgesehene Anordnung des schraubenlinienförmig über die Länge verlaufenden Schlitzes in der Spannhülse kann die Verwindungssteifigkeit durch Variation der Schraubenwindungshöhe individuell dem Wickelschema des Heizelementes angepasst werden und über die Länge der erfindungsgemäßen Bauteilheizung auch verschieden ausgeführt sein.

Die erzielbare Spannkraft der erfindungsgemäßen Spannhülse kann durch Variation des Werkstoffes, der Vergütung und der Materialdicke variabel eingestellt werden.

Durch Auswahl und/oder Variation der Spaltweiten oder weitere Ausfräsungen in der Spannhülse kann Montageraum zur geschützten Führung und Fixierung eines Mantelthermoelementes gebildet werden.

Die Spannhülse kann aus verschiedenen Stahl- oder Buntmetalllegierungen bestehen und übt eine radial wirkende Anpresskraft auf das Heizelement aus, welches dadurch in einem sicheren und für die Wärmeübertragung guten Kontakt mit dem zu beheizenden Bauteil kommt.

Das Spannhülse erlaubt es ferner, das Heizelement an beiden Enden der Spannhülse mit dieser fest zu verbinden, z.B. durch Löten, Schweißen oder eine formschlüssige Verbindung.

Neben den beschriebenen mechanischen Funktionen kann durch entsprechende Auswahl des Werkstoffs und Gestaltung der Oberflächen die Spannhülse wärmeisolierende und/oder wärmeverteilende Eigenschaften haben.

Es können auch zwei oder mehr konzentrisch angeordnete Spannhülsen aus unterschiedlichen Werkstoffen kombiniert werden, um die unterschiedlichen Materialeigenschaften zu kombinieren.

Das Aufbringen einer solchen elektrischen Bauteilheizung auf einem zylindrischen Bauteil beruht darauf, dass die Bauteilheizung ein elektrisches Heizelement und eine das Heizelement innen- oder außenseitig umgebende rohrförmige Spannhülse aus einem federelastischen Material umfasst, die eine zylindrische Außen- und Innenmantelfläche und eine Längsachse sowie einen über ihre Länge verlaufenden durchgehenden Schlitz aufweist, wobei der Schlitz über die Länge der Spannhülse betrachtet schraubenlinienförmig verläuft und an einem Ende mit einer Aussparung ausgebildet ist und das Heizelement an den beiden axialen Enden der Spannhülse mit dieser verbunden ist und umfasst die folgenden Schritte:
a) Ansetzen eines Drehwerkzeuges an der Aussparung und Aufbringen eines Drehmoments um die Längsachse der Spannhülse und Fixieren des gegenüberliegenden Endes, dergestalt, dass sich der lichte Durchmesser der Innenmantelfläche elastisch aufweitet;
b) axiales Aufbringen der aufgeweiteten Spannhülse und des elektrischen Heizelementes auf das zylindrische Bauteil;
c) Lösen des aufgebrachten Drehmoments unter elastischer Rückstellung der Spannhülse und Erzeugung einer radialen Klemmkraft in Richtung des Heizelements und des zylindrischen Bauteils.

Alternativ dazu kann das Einbringen einer elektrischen Bauteilheizung in einer zylindrischen Aufnahmebohrung eines Bauteils derart erfolgen, dass die Bauteilheizung ein elektrisches Heizelement und eine das Heizelement innen- oder außenseitig umgebende rohrförmige Spannhülse aus einem federelastischen Material umfasst, die eine zylindrische Außen- und Innenmantelfläche und eine Längsachse sowie einen über ihre Länge verlaufenden durchgehenden Schlitz aufweist, der über die Länge der Spannhülse betrachtet schraubenlinienförmig verläuft und an einem Ende mit einer Aussparung ausgebildet ist und das Heizelement an den beiden axialen Enden der Spannhülse mit dieser verbunden ist und umfasst die Schritte
a) Ansetzen eines Drehwerkzeuges an der Aussparung und Aufbringen eines Drehmoments um die Längsachse der Spannhülse und Fixieren des gegenüberliegenden Endes, dergestalt, dass sich der lichte Durchmesser der Innenmantelfläche elastisch verringert;
b) Axiales Aufbringen der komprimierten Spannhülse und des elektrischen Heizelementes in die zylindrische Aufnahmebohrung des Bauteils;
c) Lösen des aufgebrachten Drehmoments unter elastischer Rückstellung der Spannhülse und Erzeugung einer radialen Klemmkraft in Richtung des Heizelements und der zylindrischen Aufnahmebohrung des Bauteils

Weitere Ausgestaltungen und Einzelheiten der Erfindung werden nachfolgend anhand der ein Ausführungsbeispiel darstellende Zeichnung erläutert. Es zeigen:

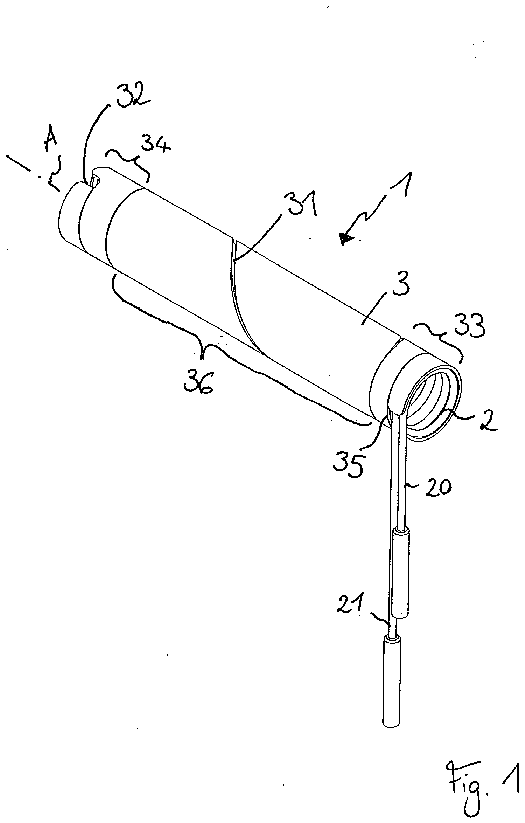

- Figur 1: in perspektivischer Darstellung eine elektrische Bauteilheizung gemäß der Erfindung;
- Figur 2: die Darstellung gemäß Figur 1 mit halb transparent gezeichnetem Spannelement;
- Figur 3: in einer schematisierten Darstellung die Montage der Bauteilheizung gemäß Figur 1;
- Figur 4: ein Drehwerkzeug gemäß Figur 3;
- Figur 5: eine weitere Ausgestaltung einer erfindungsgemäßen elektrischen Bauteilheizung.

Aus den Figuren ist eine elektrische Bauteilheizung 1 für ein nicht dargestelltes zylindrisches Bauteil, etwa eine Heißkanaldüse einer Spritzgiessmaschine für thermoplastische Kunststoffe ersichtlich.

Die elektrische Bauteilheizung 1 umfasst ein elektrisches Heizelement 2 mit Anschlussabschnitten 20, 21 zum Anschluss elektrischer Versorgungsleitungen (nicht dargestellt), wobei sich das Heizelement 2 bei Beauftragung mit einem entsprechenden elektrischen Strom nach Art einer Widerstandsheizung erwärmt.

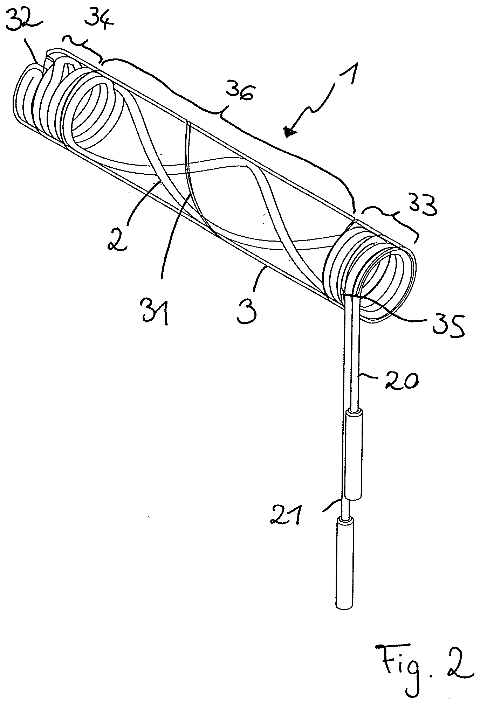

Wie insbesondere auch aus der Figur 2 ersichtlich, ist das elektrische Heizelement 2 in Anpassung an das zu beheizende zylindrische Bauteil wendelförmig gewickelt und ist außenseitig nach Art eines Mantels von einer zylindrischen, rohrförmigen Spannhülse 3 aus einem federelastischen Material, beispielsweise einem Edelstahlblech umgeben, wobei die in Richtung der Längsachse A weisenden Stirnseiten offen bleiben.

An den beiden in Richtung der Achse A liegenden axialen Enden ist das Heizelement z.B. mittels einer Punktschweißung oder einer Lötverbindung mit der Innenmantelfläche der Spannhülse 3 verbunden.

Die Spannhülse 3 weist einen über ihre Länge verlaufenden durchgehenden Schlitz 31 auf, der über die Länge der Spannhülse 3 betrachtet, d. h. in Richtung der Achse A, schraubenlinienförmig verläuft. Ausgehend von einer Ausnehmung 35, die die zylindrische Außen- und Innenmantelfläche der Spannhülse 3 durchsetzt, sodass die Anschlussabschnitte 20, 21 über diese Ausnehmung 35 herausgeführt sind, verläuft der durchgehende Schlitz 31 zunächst in einem ersten Endbereich 33 der Spannhülse 3 mit einer geringen Steigung über etwa 1,5 vollständige Schraubengänge um die Achse A der Spannhülse 3. Hieran anschließend verläuft der Schlitz 31 über einen an den Endbereich 33 anschließenden Längenabschnitt 36 der Spannhülse 3 mit einer deutlich größeren Steigung, und zwar über die Länge der Spannhülse 3 betrachtet in Form eines vollständigen Schraubenganges. Im Bereich des gegenüberliegenden und an den Längenabschnitt 36 anschließenden Endbereich 34 der Spannhülse 3 verläuft der Spalt 31 wiederum vergleichbar zum Endbereich 33 mit entsprechend geringerer Steigung über etwa 1,5 vollständige Schraubengänge um die Achse A der Spannhülse 3 und endet in einer Ausnehmung 32.

Die Ausnehmungen 32, 35 sowie der durchgängig verlaufende Schlitz 31 durchsetzen die Spannhülse 3 senkrecht zur Achse A vollständig, d. h. sie verlaufen von der Außenmantelfläche bis zur Innenmantelfläche der Spannhülse 3.

Korrespondierend zum unterschiedlichen Steigungsverlauf des Schlitzes 31 ist auch die wendelförmige Anordnung des elektrischen Heizelementes 2 mit unterschiedlicher Steigung ausgeführt, und zwar korrespondierend zu den Endbereichen 33,34 mit geringerer Steigung als im zum Längenabschnitt 36 korrespondierenden Bereich. Durch diese unterschiedlichen Wicklungsdichten des Heizelementes 2 kann die Leistungsverteilung auf das zu beheizende Bauteil je nach Anforderung variiert werden.

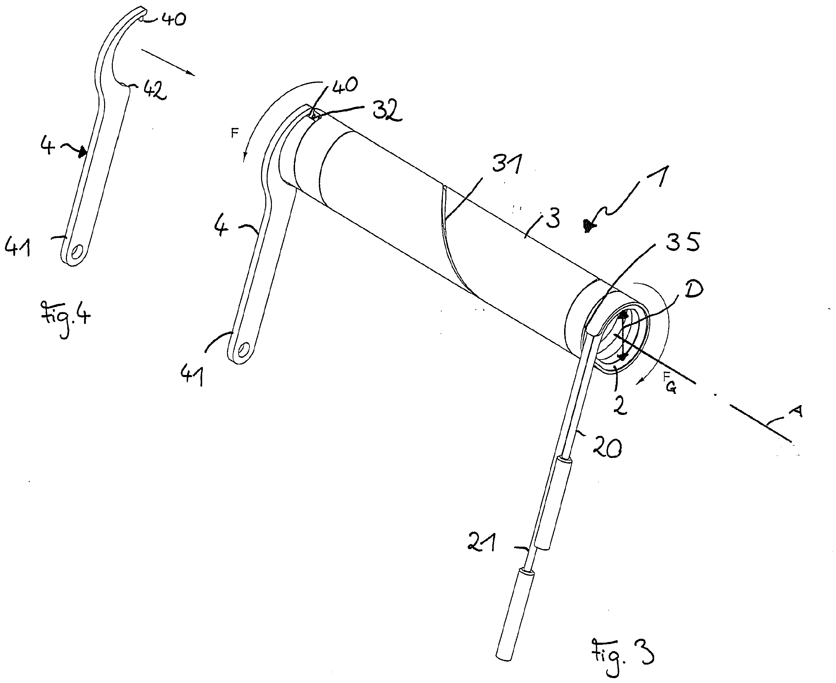

Die Spannhülse 3 dient im hier nicht dargestellten montierten Zustand der Bauteilheizung 1 dazu, das elektrische Heizelement 2 auf dem Bauteil festzuklemmen. Dazu wird das elektrische Heizelement 2 mitsamt der mantelförmig umgebenden Spannhülse 3 auf das mit korrespondierenden Durchmesser ausgebildete zu beheizende zylindrische Bauteil aufgeschoben, woraufhin das Bauteil im Bereich des lichten Durchmessers D der Bauteilheizung 1 entlang der Achse A angeordnet wird, siehe Figur 3. Durch die federelastischen Eigenschaften der Spannhülse 3 und eine entsprechende Durchmesserwahl wird sichergestellt, dass die Spannhülse 3 eine radial nach innen gerichtete Klemmkraft auf die Windungen des elektrischen Heizelementes 2 und das innerhalb befindliche Bauteil ausübt, sodass die Bauteilheizung 1 auf dem Bauteil fixiert und ein guter Oberflächenkontakt zwischen dem Bauteil und den Windungen des elektrischen Heizelementes 2 hergestellt wird. Gleichzeitig sorgt die Spannhülse 3 für eine gleichmäßige Temperaturverteilung und schützt das elektrische Heizelement 2 vor äußeren Beschädigungen.

Das Material der Spannhülse 3 ist so gewählt, dass die ausgeübte Klemmkraft über den zu erwartenden Temperaturbereich, der üblicherweise bis 500 °C beträgt, nahezu konstant bleibt.

Zur Montage der dargestellten Bauteilheizung 1 auf dem zylindrischen Bauteil wird ein handelsüblicher Hakenschlüssel gemäß Figur 4 als Drehwerkzeug 4 verwendet, welcher einen Griff 41 sowie ein an den Griff 41 anschließendes gebogenes Teil aufweist, welches an seinem freien Ende einen nach innen vorstehenden Haken 40 aufweist und im Übergangsbereich zum Griff 41 eine Abstützfläche 42 besitzt.

Wie insbesondere aus der Figur 3 ersichtlich, wird das Drehwerkzeug 4 zur Montage der elektrischen Bauteilheizung 1 mit dem vorstehenden Haken 40 in die Ausnehmung 32 der Spannhülse 3 eingesetzt und stützt sich mit der Abstützfläche 42 auf dem gegenüberliegenden Umfangsabschnitt gegen die Außenmantelfläche der Spannhülse 3 im Endbereich 34 ab. Der gegenüberliegende Endbereich 33 der Spannhülse wird zum Beispiel von Hand fixiert und durch Aufbringen eines Drehmoments gemäß Pfeil F über das angesetzte Drehwerkzeug 4 um die Achse A weitet sich der lichte Durchmesser D der Spannhülse 3 und des daran endseitig fixierten Heizelementes 2 infolge des schraubenlinienförmigen Verlaufs des Schlitzes 31 auf. Im Endbereich 33 wird dabei durch die feste Einspannung zum Beispiel von Hand ein entsprechendes Gegendrehmoment F_{G} erzeugt.

Die solchermaßen in ihrem lichten Durchmesser D aufgeweitete Spannhülse 3 kann sodann mitsamt des entlang der Innenmantelfläche angeordneten und ebenfalls leicht elastisch aufgeweiteten elektrischen Heizelements 2 axial entlang der Achse A auf das zu beheizende zylindrische Bauteil aufgeschoben werden.

Sobald das über das angesetzte Drehwerkzeug 4 aufgebrachte Drehmoment F wieder gelöst wird, stellt sich die Spannhülse 3 elastisch in Richtung ihrer Ausgangskonfiguration zurück und klemmt dabei das elektrische Heizelement 2 in der gewünschten Weise durch Verringerung der lichten Weite des Durchmessers D auf dem zu beheizenden Bauteil fest.

Eine solche Montage lässt sich auf einfachste Weise mit Standard-Drehwerkzeugen binnen kürzester Zeit bewerkstelligen und ebenso einfach und schnell in umgekehrter Weise wieder demontieren.

Durch die in den einzelnen Abschnitten 33, 34, 36 unterschiedlich ausgewählten Steigungen des durchgängig verlaufenden Schlitzes 31 kann die Aufweitung bei unterschiedlichen Steigungen des Heizelementes variiert, bzw. konstant gehalten werden.

Insofern kann durch Anpassung des Verlaufs des Spaltes 31 der Spannhülse 3 an das bauteilabhängige Wickelschema der elektrischen Heizeinrichtung 2 die Verdrehsteifigkeit der Spannhülse 3 an die elektrische Heizeinrichtung 2 adaptiert werden und ein gleichmäßiges Aufspannen ermöglicht werden.

Die insgesamt erzielbare Klemmkraft der Spannhülse 3 kann überdies durch Variation der Wanddicke derselben optimiert werden.

Durch Variation der Anzahl der Windungen der elektrischen Heizeinrichtung 2 kann die Leistungsverteilung auf das zu beheizende Bauteil variiert werden, wobei auch ein achsparalleler Verlauf zur Achse A in Längenabschnitten der elektrischen Heizeinrichtung 2 vorgesehen sein kann, um (nahezu) unbeheizte Zonen zu schaffen.

Überdies kann ein Endbereich der der Spannhülse 3 so ausgestaltet sein, dass die Messspitze eines Mantelthermoelements direkt oder kombiniert mit einem Zusatzbauteil aufgenommen werden kann. In diesem Falle kann der spiralförmig verlaufende Schlitz 31 über die Länge der Spannhülse 3 so ausgeführt werden, dass hierin das Thermoelement bis zum anderen Ende der Spannhülse 3 geführt werden kann ohne den Einbauraum zu vergrößern. Mit einem solchen integrierten Thermoelement können die aktuellen Temperaturen an eine Steuer- und Regeleinrichtung zurückgemeldet werden.

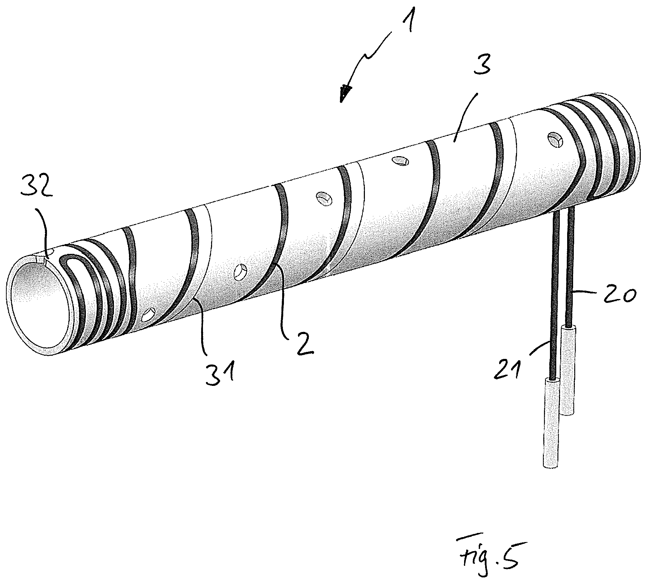

In der Figur 5 ist eine weitere Ausführungsform einer derartigen Bauteilheizung dargestellt. Die Spannhülse 3 umfasst wiederum einen schraubenlinienförmig über die Länge verlaufenden durchgehenden Schlitz 31 und ist beispielsweise aus einem planen Blechzuschnitt gefertigt, der zu der rohrförmigen bzw. zylindrischen Konfiguration in einem entsprechenden Werkzeug umgeformt worden ist.

Im Unterschied zu den vorangehend erläuterten Ausführungsbeispielen ist das elektrische Heizelement 2 in dieser Ausführungsform nicht im Bereich der Innenmantelfläche der Spannhülse 3 angeordnet, sondern verläuft im Bereich der Außenmantelfläche der Spannhülse 3. Dazu ist in diesem Ausführungsbeispiel im Bereich der Außenmantelfläche auch eine nutförmige Vertiefung eingebracht, in die das elektrische Heizelement 2 mit Ausnahme der Anschlussabschnitte 20, 21 vollständig aufgenommen eingesetzt ist.

Auch diese Bauteilheizung gemäß Figur 5 kann durch Angriff eines Drehwerkzeugs an der Aussparung 32 aufgeweitet werden, um die solchermaßen aufgeweitete Spannhülse 3 mitsamt dem außenseitig verlaufenden elektrischen Heizelement 2 auf einem zylindrischen Bauteil klemmend zu befestigen. Die Beheizung des zylindrischen Bauteiles erfolgt von daher ausgehend vom elektrischen Heizelement 2 durch die Spannhülse 3 hindurch auf das zylindrische Bauteil.

Alternativ können die beschriebenen Ausführungsformen der Bauteilheizung auch so ausgestaltet sein, dass sie sich durch Angriff eines geeigneten Drehwerkzeugs im Durchmesser elastisch komprimieren lassen, sodass die Einbringung in einer zylindrischen Bohrung als Beispiel eines zylindrischen Bauteils im Sinne der vorliegend beschriebenen Erfindung erfolgen kann, in der sich die Bauteilheizung nach Aufheben des aufgebrachten Drehmoments festklemmt.

## Patentansprüche

1. Elektrische Bauteilheizung (1), umfassend ein zylindrisches Bauteil, ein an dem zylindrischen Bauteil angebrachtes elektrisches Heizelement (2) und eine dem elektrischen Heizelement (2) benachbart zugeordnete rohrförmige Spannhülse (3) aus einem federelastischen Material, die eine zylindrische Außen- und Innenmantelfläche und einen über ihre Länge verlaufenden durchgehenden Schlitz (31) sowie eine Längsachse (A) aufweist, wobei das Heizelement (2) an den beiden axialen Enden der Spannhülse (3) mit dieser verbunden ist und der Schlitz (31) über die Länge der Spannhülse (3) betrachtet schraubenlinienförmig verläuft, wobei die Spannhülse (3) mitsamt des elektrischen Heizelements (2) auf dem Bauteil unter Ausübung einer radialen Anpresskraft festgeklemmt ist, **dadurch gekennzeichnet, dass** die Bauteilheizung (1) ferner ein Drehwerkzeug und die Spannhülse (3) an mindestens einem Ende eine Aussparung (32) aufweist, in die das Drehwerkzeug einsetzbar ist, um mittels Aufbringen eines um die Längsachse (A) gerichteten Drehmoments (F) an einem Ende und Fixieren des gegenüberliegenden Endes eine elastische Aufweitung bzw. Komprimierung des lichten Innendurchmessers der Spannhülse (3) und des Heizelements (2) zu bewirken.

2. Bauteilheizung (1) nach Anspruch 1, **dadurch gekennzeichnet, dass** das Bauteil zylindrisch ausgebildet ist und das Heizelement (2) auf das Bauteil aufgebracht ist und die Spannhülse (3) das elektrische Heizelement (2) innen- oder außenseitig umgibt.

3. Bauteilheizung (1) nach Anspruch 1, **dadurch gekennzeichnet, dass** das Bauteil eine zylindrisch ausgebildete Aufnahmebohrung aufweist und das Heizelement (2) in die Aufnahmebohrung eingebracht ist und die Spannhülse (3) innen- oder außenseitig am elektrischen Heizelement (3) angeordnet ist.

4. Bauteilheizung (1) nach einem der Ansprüche 1 bis 3, **dadurch gekennzeichnet, dass** der Schlitz (31) in Form eines vollständigen Schraubenganges über die Länge der Spannhülse (3) verläuft.

5. Bauteilheizung (1) nach einem der Ansprüche 1 bis 4, **dadurch gekennzeichnet, dass** der Schlitz (31) über die Länge der Spannhülse (3) mit unterschiedlicher Steigung verläuft.

6. Bauteilheizung (1) nach einem der Ansprüche 1 bis 5, **dadurch gekennzeichnet, dass** der Schlitz (30) an den Endbereichen (33, 34) der Spannhülse (3) mit einer geringeren Steigung verläuft als in dem Längenabschnitt (36) zwischen den Endbereichen (33, 34).

7. Bauteilheizung (1) nach einem der Ansprüche 1 bis 6, **dadurch gekennzeichnet, dass** ein Endbereich (33) der Spannhülse (3) eine Ausnehmung (35) für den Durchtritt von Anschlussabschnitten (20, 21) des elektrischen Heizelements (2) aufweist und am gegenüberliegenden Endbereich (34) eine Aussparung (32) zum Angriff des Drehwerkzeuges (4) ausgebildet ist.

8. Bauteilheizung (1) nach einem der Ansprüche 1 bis 7, **dadurch gekennzeichnet, dass** die Aussparung (32) zum Angriff des als Hakenschlüssel ausgebildeten Drehwerkzeuges (4) ausgestaltet ist.

9. Bauteilheizung (1) nach einem der Ansprüche 1 bis 8, **dadurch gekennzeichnet, dass** die Spannhülse (3) aus einem federelastischen Material gebildet ist, dessen Federkraft zwischen Raumtemperatur und 500 °C erhalten bleibt.

10. Bauteilheizung (1) nach einem der Ansprüche 1 bis 9, **dadurch gekennzeichnet, dass** das elektrische Heizelement (2) wendelförmig um das zylindrische Bauteil verlaufend angeordnet ist.

11. Bauteilheizung (1) nach einem der Ansprüche 1 bis 10, **dadurch gekennzeichnet, dass** die Messspitze eines Mantelthermoelements in einem Endbereich der Spannhülse (3) angeordnet ist.

12. Bauteilheizung (1) nach Anspruch 11, **dadurch gekennzeichnet, dass** der Schlitz (31) über die Länge der Spannhülse (3) so ausgebildet ist, dass das Thermoelement vollständig innerhalb des Schlitzes (31) angeordnet ist.

13. Bauteilheizung (1) nach einem der Ansprüche 1 bis 12, **dadurch gekennzeichnet, dass** die Wanddicke der Spannhülse (3) über die Länge derselben unterschiedlich ausgebildet ist.

14. Bauteilheizung (1) nach einem der Ansprüche 1 bis 13, **dadurch gekennzeichnet, dass** die Spannhülse (3) auf ihrer dem elektrischen Heizelement (2) zugewandten Oberfläche mindestens eine nutförmige Vertiefung aufweist, in der das elektrische Heizelement (2) zumindest teilweise aufgenommen ist.

## Claims

1. Electrical component heater (1), comprising a cylindrical component, an electric heating element (2) attached to the cylindrical component, and a tubular clamping sleeve (3) made of a spring-elastic material assigned adjacent to the electric heating element (2), which has a cylindrical outer and inner casing surface and a continuous slot (31) extending over its length and a longitudinal axis (A), wherein the heating element (2) is connected to the clamping sleeve (3) at both its axial ends and the slot (31) extends helically over the length of the clamping sleeve (3), wherein the clamping sleeve (3) together with the electric heating element (2) is clamped to the component by exerting a radial contact force, **characterized in that** the component heater (1) further comprises a rotary tool and the clamping sleeve (3) has a recess (32) at least at one end into which the rotary tool can be inserted in order, by applying a torque (F) directed around the longitudinal axis (A) at one end and fixing the opposite end, to cause elastic expansion or compression of the clear internal diameter of the clamping sleeve (3) and the heating element (2).

2. Component heater (1) according to claim 1, **characterized in that** the component is cylindrical and the heating element (2) is applied to the component and the clamping sleeve (3) surrounds the electrical heating element (2) on the inside or outside.

3. Component heater (1) according to claim 1, **characterized in that** the component has a cylindrical mounting bore and the heating element (2) is inserted into the mounting bore and the clamping sleeve (3) is arranged on the inside or outside of the electric heating element (3).

4. Component heater (1) according to any one of claims 1 to 3, **characterized in that** the slot (31) extends in the form of a complete screw thread over the length of the clamping sleeve (3).

5. Component heater (1) according to any one of claims 1 to 4, **characterized in that** the slot (31) extends along the length of the clamping sleeve (3) with varying pitch.

6. Component heater (1) according to any one of claims 1 to 5, **characterized in that** the slot (30) at the end regions (33, 34) of the clamping sleeve (3) has a smaller pitch than in the longitudinal section (36) between the end regions (33, 34).

7. Component heater (1) according to any one of claims 1 to 6, **characterized in that** an end region (33) of the clamping sleeve (3) has a recess (35) for the passage of connecting sections (20, 21) of the electrical heating element (2) and a recess (32) for engaging the rotary tool (4) is formed at the opposite end region (34).

8. Component heater (1) according to any one of claims 1 to 7, **characterized in that** the recess (32) is configured for engagement by the rotary tool (4) configured as a hook wrench.

9. Component heater (1) according to any one of claims 1 to 8, **characterized in that** the clamping sleeve (3) is made of a spring-elastic material, whose spring force is maintained between ambient temperature and 500°C.

10. Component heater (1) according to any one of claims 1 to 9, **characterized in that** the electrical heating element (2) is arranged in a helical form around the cylindrical component.

11. Component heater (1) according to any one of claims 1 to 10, **characterized in that** the measuring tip of a casing thermocouple is arranged in an end region of the clamping sleeve (3).

12. Component heater (1) according to claim 11, **characterized in that** the slot (31) is formed over the length of the clamping sleeve (3) in such a way that the thermocouple is arranged fully inside the slot (31).

13. Component heater (1) according to any one of claims 1 to 12, **characterized in that** the wall thickness of the clamping sleeve (3) varies over its length.

14. Component heater (1) according to any one of claims 1 to 13, **characterized in that** the clamping sleeve (3) has at least one groove-shaped depression on its surface facing the electric heating element (2), in which depression the electric heating element (2) is at least partially accommodated.

## Revendications

1. Chauffage électrique de composant (1), comprenant un composant cylindrique, un élément chauffant électrique (2) appliqué sur le composant cylindrique et une douille de serrage tubulaire (3) en un matériau élastique associée adjacente à l'élément chauffant électrique (2), matériau qui présente une surface d'enveloppe extérieure et intérieure cylindrique et une fente continue (31) s'étendant sur sa longueur ainsi qu'un axe longitudinal (A), dans lequel l'élément chauffant (2) est relié à la douille de serrage (3) au niveau des deux extrémités axiales de celle-ci, et la fente (31) s'étend en hélice sur la longueur de la douille de serrage (3), dans lequel la douille de serrage (3) est serrée avec l'élément chauffant électrique (2) sur le composant en exerçant une force de pression radiale, **caractérisé en ce que** le chauffage de composant (1) présente en outre un outil rotatif, et la douille de serrage (3) présente un évidement (32) au niveau d'au moins une extrémité, évidement dans lequel l'outil rotatif peut être inséré pour effectuer une dilatation ou une compression élastique du diamètre intérieur libre de la douille de serrage (3) et de l'élément chauffant (2) par application d'un couple (F) dirigé autour de l'axe longitudinal (A) au niveau d'une extrémité et fixation de l'extrémité opposée.

2. Chauffage de composant (1) selon la revendication 1, **caractérisé en ce que** le composant est conçu de manière cylindrique, et l'élément chauffant (2) est appliqué sur le composant et la douille de serrage (3) entoure l'élément chauffant électrique (2) à l'intérieur ou à l'extérieur.

3. Chauffage de composant (1) selon la revendication 1, **caractérisé en ce que** le composant présente un alésage de logement conçu de manière cylindrique, et l'élément chauffant (2) est inséré dans l'alésage de logement et la douille de serrage (3) est disposée à l'intérieur ou à l'extérieur de l'élément chauffant électrique (3).

4. Chauffage de composant (1) selon l'une quelconque des revendications 1 à 3, **caractérisé en ce que** la fente (31) s'étend sous la forme d'un filetage de vis complet sur la longueur de la douille de serrage (3).

5. Chauffage de composant (1) selon l'une quelconque des revendications 1 à 4, **caractérisé en ce que** la fente (31) s'étend sur la longueur de la douille de serrage (3) avec une inclinaison variable.

6. Chauffage de composant (1) selon l'une quelconque des revendications 1 à 5, **caractérisé en ce que** la fente (30) au niveau des zones d'extrémité (33, 34) de la douille de serrage (3) s'étend avec une inclinaison plus faible que dans la section longitudinale (36) entre les zones d'extrémité (33, 34).

7. Chauffage de composant (1) selon l'une quelconque des revendications 1 à 6, **caractérisé en ce qu'**une zone d'extrémité (33) de la douille de serrage (3) présente un évidement (35) pour le passage de sections de raccordement (20, 21) de l'élément chauffant électrique (2) et un évidement (32) est conçu au niveau de la zone d'extrémité opposée (34) pour l'engagement de l'outil rotatif (4).

8. Chauffage de composant (1) selon l'une quelconque des revendications 1 à 7, **caractérisé en ce que** l'évidement (32) est réalisé pour l'engagement de l'outil rotatif (4) conçu en tant que clé à crochet.

9. Chauffage de composant (1) selon l'une quelconque des revendications 1 à 8, **caractérisé en ce que** la douille de serrage (3) est fabriquée à partir d'un matériau élastique dont la force élastique est maintenue entre la température ambiante et 500 °C.

10. Chauffage de composant (1) selon l'une quelconque des revendications 1 à 9, **caractérisé en ce que** l'élément chauffant électrique (2) est disposé selon une forme d'hélice autour du composant cylindrique.

11. Chauffage de composant (1) selon l'une quelconque des revendications 1 à 10, **caractérisé en ce que** la pointe de mesure d'un thermocouple à enveloppe est disposée dans une zone d'extrémité de la douille de serrage (3).

12. Chauffage de composant (1) selon la revendication 11, **caractérisé en ce que** la fente (31) est conçue sur la longueur de la douille de serrage (3), de sorte que le thermocouple soit disposé entièrement à l'intérieur de la fente (31).

13. Chauffage de composant (1) selon l'une quelconque des revendications 1 à 12, **caractérisé en ce que** l'épaisseur de paroi de la douille de serrage (3) varie sur sa longueur.

14. Chauffage de composant (1) selon l'une quelconque des revendications 1 à 13, **caractérisé en ce que** la douille de serrage (3) présente, sur sa surface tournée vers l'élément chauffant électrique (2), au moins un renfoncement en forme de rainure dans lequel l'élément chauffant électrique (2) est au moins partiellement logé.
